# EUROPEAN PATENT APPLICATION

(11) **EP 4 726 859 A1**
(43) Date of publication of application: **15.04.2026**
(21) Application number: 25203883.1
(22) Date of filing: 23.09.2025
(51) Int. Cl.: H01M 10/617, H01M 10/6235, H01M 10/6562, H01M 50/211, H01M 50/247, H01M 50/291

(54) **BATTERY PACK**

(30) Priority: 30.09.2024 JP 2024169821
(71) Applicant: Yamabiko Corporation, Ohme-shi, Tokyo 198-8760 (JP)
(72) Inventor: ICHIKAWA, Masashi, Tokyo, 1988760 (JP); FUNAMOTO, Kunio, Tokyo, 1988760 (JP); TANAKA, Hirotsugu, Tokyo, 1988760 (JP)
(74) Representative: Winter, Brandl - Partnerschaft mbB

(57) **Abstract**

According to an aspect of the present disclosure, there is provided a battery pack, including: a case including opening portions that allow air outside the case to flow into an inside of the case; and a plurality of battery cells housed in the case and arranged with a gap between each other, the gap including a plurality of gaps, the opening portions being provided facing the gaps.

## Description

### BACKGROUND

The present disclosure relates to a battery pack.

### RELATED ART

Patent Document 1 discloses an energy storage module that has an optimal ratio of volume, weight, and/or material/component requirements to the energy that can be stored in the energy storage module, and is as safe as possible.

This energy storage module is based in particular on a battery pack for powering an electric power tool, which comprises a plurality of cells electrically interconnected for energy storage. The cells are proposed to be electrochemical power storage cells configured by a dimensionally unstable flexible cell casing. Patent Document 1 also relates to a power tool including at least one such energy storage module.

### PRIOR ART DOCUMENTS

### Patent document

[Patent Document 1] European Patent No. 2269246

### SUMMARY

### Problems to be Solved by Invention

However, the conventional technology disclosed in Patent Document 1 still has room for improvement.

In view of the above circumstances, the present disclosure provides a battery pack capable of cooling battery cells more by allowing air to efficiently flow between the battery cells.

### Means for Solving Problems

According to an aspect of the present disclosure, there is provided a battery pack, including: a case including opening portions that allow air outside the case to flow into an inside of the case; and a plurality of battery cells housed in the case and arranged with a gap between each other, the gap including a plurality of gaps, the opening portions being provided facing the gaps.

According to such an aspect, the battery cells can be cooled more by allowing air to efficiently flow between the battery cells.

### BRIEF DESCRIPTION OF DRAWINGS

FIG. 1 is a perspective view of an object as seen from above.
FIG. 2 is an overall perspective view of a battery pack.
FIG. 3 is an exploded perspective view showing a configuration of a wiring board, battery cells, and a seal member.
FIG. 4 is an exploded perspective view showing a configuration of a case, a wiring board, battery cells, and a seal member.
FIG. 5 is an overall view of the battery pack.
FIG. 6 is an overall view of the battery pack.
FIG. 7 is a cross-sectional view taken along line A-A shown in FIG. 5 for explaining an internal configuration of the battery pack.
FIG. 8 is a cross-sectional perspective view taken along line B-B shown in FIG. 5 for explaining opening portions.
FIG. 9 is a cross-sectional perspective view taken along line C-C shown in FIG. 6 for explaining opening portions.
FIG. 10 is a cross-sectional perspective view taken along line D-D shown in FIG. 6 with some components of the battery pack omitted, for explaining an internal configuration of the battery pack.
FIG. 11 is an enlarged view for explaining the opening portions shown by an area E of FIG. 6.
FIG. 12 is an enlarged view for explaining the opening portions shown by an area F of FIG. 7.
FIG. 13 is a cross-sectional view taken along line A-A shown in FIG. 5 for explaining a modified example of a case.
FIG. 14 is an overall perspective view of the battery pack for explaining a modified example of a case.
FIG. 15 is an overall view showing a modified example of an opening portion.

### DETAILED DESCRIPTION

Hereinafter, an example of an embodiment of the present disclosure will be described with reference to the drawings. Various features described below in the following embodiment can be combined with each other.

### <Object 100>

First, an object 100 according to one embodiment is described.

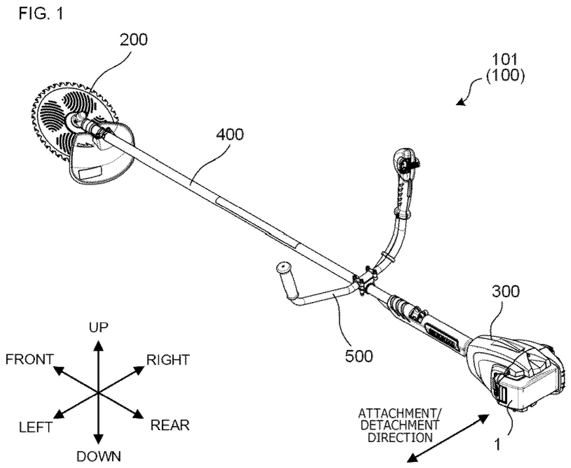

FIG. 1 is a perspective view of an object as seen from above.

In the following description, directions of the object 100 and each member configuring the object 100 are defined based on "up", "down", "left", "right", "front" and "rear" shown in FIG. 1. Furthermore, in the following description, "up" is also referred to as an "upper side" or "upper", and "down" is also referred to as a "lower side" or "lower". Moreover, the direction formed by "up" and "down" is referred to as "up and down" or an "up-down direction. The same applies to "left", "right", "front" and "rear".

The object 100 shown in FIG. 1 is a portable brush cutter 101. The brush cutter 101 includes a cutting blade 200, a main body portion 300, an operation rod 400, a handle 500, and a battery pack 1. The brush cutter 101 is a shoulder band type brush cutter that adopts an electric motor (not shown) as a power source. Although the brush cutter 101 is given as an example of the object 100, the object 100 is not particularly limited as long as it is any type of electric machine that uses the battery pack 1. For example, the object 100 may be an electric working machine, an electric tool, an industrial machine, or the like to which the battery pack 1 can be detachably attached. In the following, an example in which the object 100 is the brush cutter 101 will be described.

As shown in FIG. 1, the brush cutter 101 includes a disk-shaped cutting blade 200 on the front side thereof. The cutting blade 200 is configured to rotate by the rotational power of an electric motor (not shown), and is configured to be able to cut grass and the like by rotating. Specifically, a tipped saw is adopted for the cutting blade 200.

The cutting blade 200 is connected to the front side of the operation rod 400. The operation rod 400 is a pipe-shaped member extending in the front-rear direction, and includes a drive transmission shaft (not shown) therein. The operation rod 400 is configured to transmit power to the cutting blade 200 via the drive transmission shaft. The operation rod 400 includes the main body portion 300 on the rear side thereof.

In the operation rod 400, the handle 500 is attached between the cutting blade 200 and the main body portion 300. The handle 500 is a portion that is held and operated by the operator's hands. The main body portion 300 includes an electric motor (not shown), a control unit (not shown) and the like therein.

The battery pack 1 is detachably attached to the rear side of the main body portion 300. The battery pack 1 is attachable to and detachable from the brush cutter 101 by relatively moving the battery pack 1 in the left-right direction that is a predetermined direction to the brush cutter 101.

### <Battery Pack 1>

Next, the battery pack 1 according to one embodiment is described.

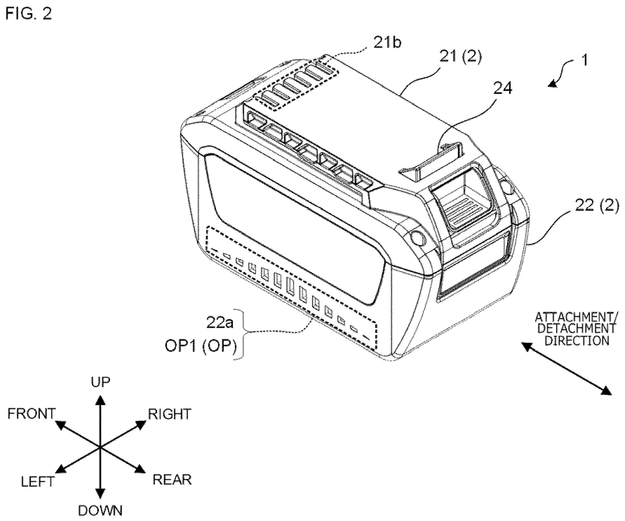

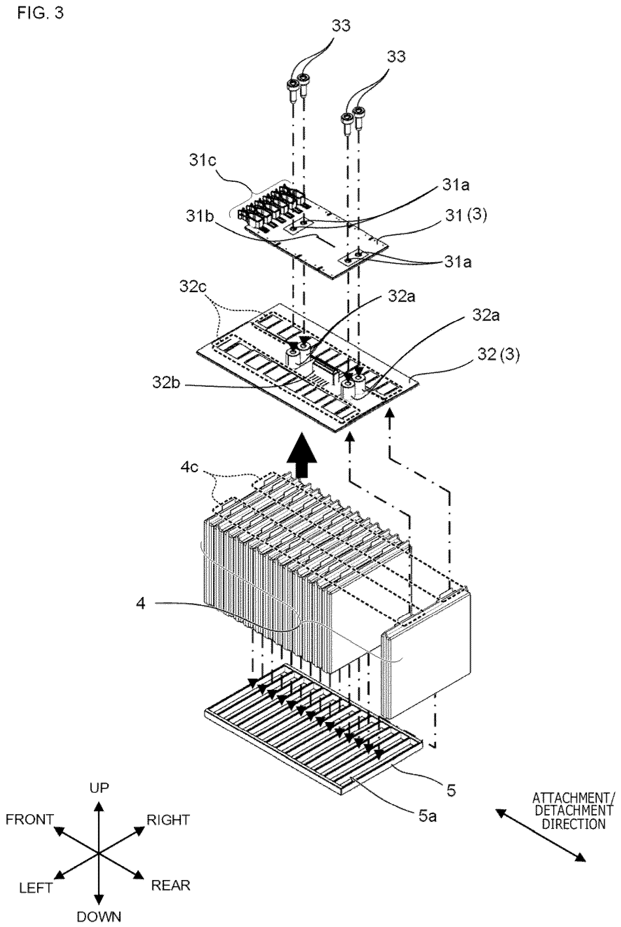

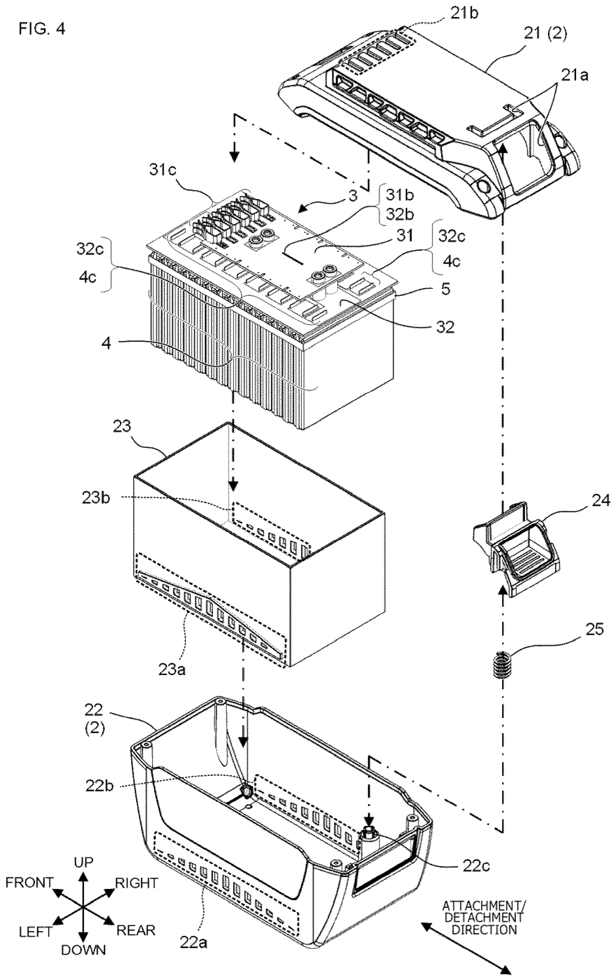

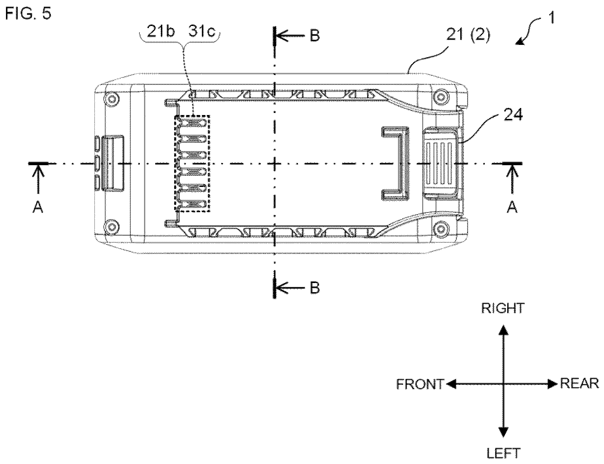

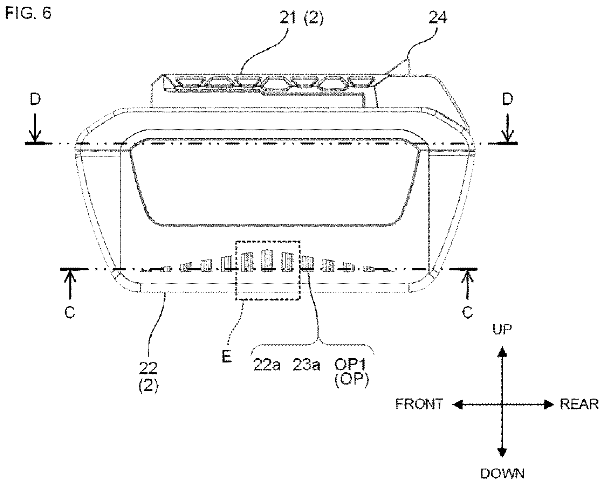

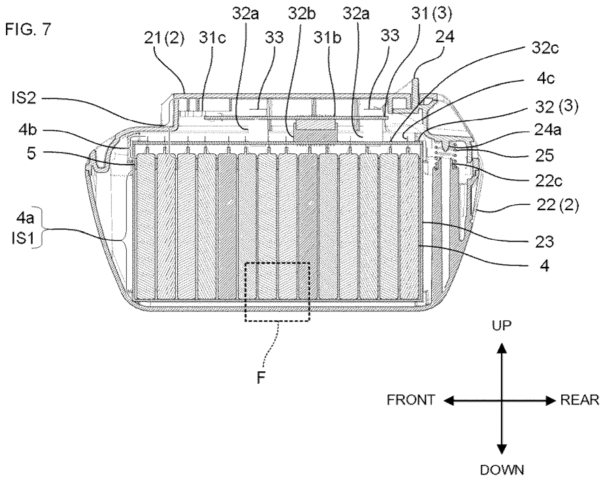

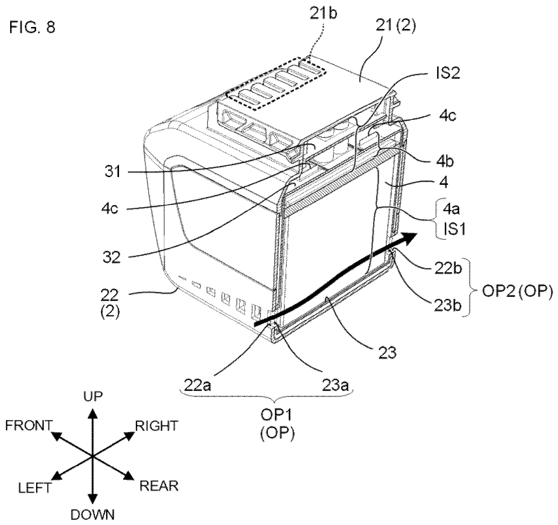

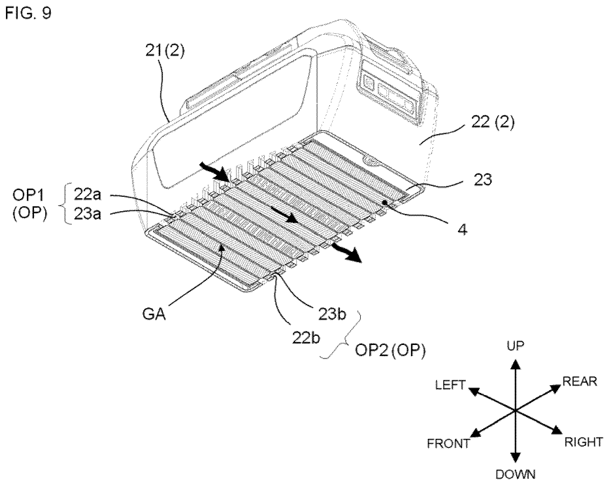

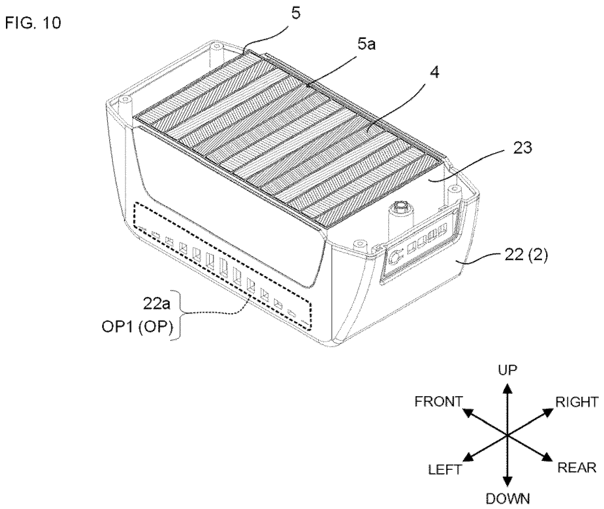

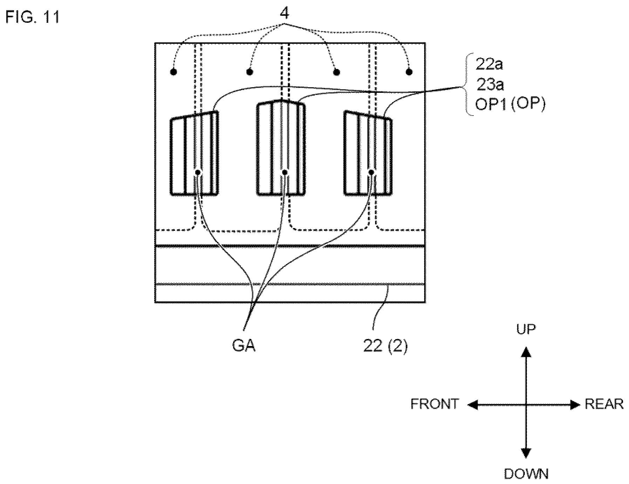

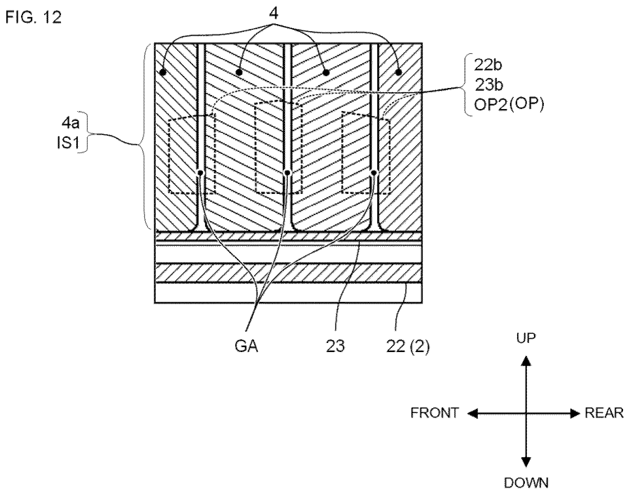

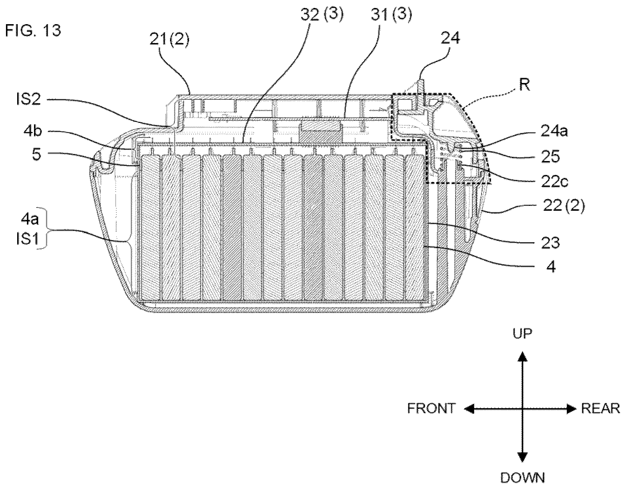

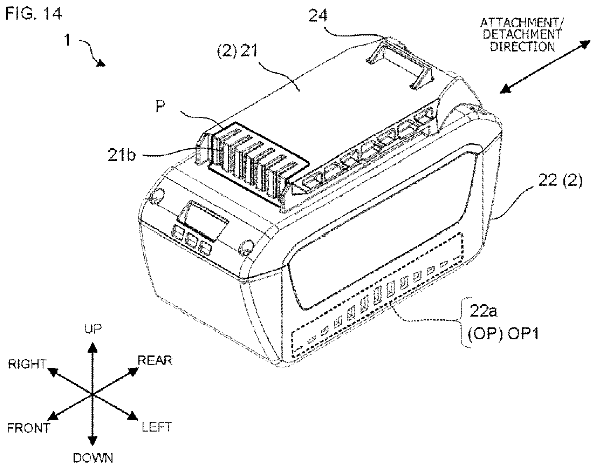

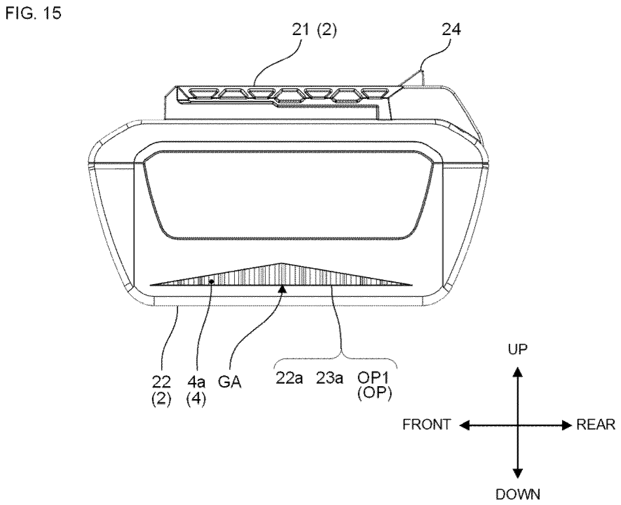

FIG. 2 is an overall perspective view of a battery pack. FIG. 3 is an exploded perspective view showing a configuration of a wiring board, battery cells, and a seal member. FIG. 4 is an exploded perspective view showing a configuration of a case, a wiring board, battery cells, and a seal member. FIG.5 and FIG.6 are overall views of the battery pack. FIG. 7 is a cross-sectional view taken along line A-A shown in FIG. 5 for explaining an internal configuration of the battery pack. FIG. 8 is a cross-sectional perspective view taken along line B-B shown in FIG. 5 for explaining opening portions. FIG. 9 is a cross-sectional perspective view taken along line C-C shown in FIG. 6 for explaining opening portions. FIG. 10 is a cross-sectional perspective view taken along line D-D shown in FIG. 6 with some components of the battery pack omitted, for explaining an internal configuration of the battery pack. FIG. 11 is an enlarged view for explaining the opening portions shown by an area E of FIG. 6. FIG. 12 is an enlarged view for explaining the opening portions shown by an area F of FIG. 7. FIG. 13 is a cross-sectional view taken along line A-A shown in FIG. 5 for explaining a modified example of the case. FIG. 14 is an overall perspective view of the battery pack for explaining a modified example of the case. FIG. 15 is an overall view showing a modified example of an opening portion.

In the following description, directions of the battery pack 1 and each member configuring the battery pack 1 are defined based on "up", "down", "left", "right", "front" and "rear" shown in FIG. 2 to FIG. 15. Furthermore, in the following description, "up" is also referred to as an "upper side" or "upper", and "down" is also referred to as a "lower side" or "lower". Moreover, the direction formed by "up" and "down" is referred to as "up and down" or an "up-down direction. The same applies to "left", "right", "front" and "rear".

As shown in FIG. 2, the battery pack 1 has a box shape and includes a case 2. The case 2 includes an upper external housing 21 and a lower external housing 22, so that the case 2 is divided in the up-down direction by a plane defined by front/rear and left/right. The upper external housing 21 and the lower external housing 22 are fixed together by fastening members (not shown) such as screws.

As shown in FIG. 3 and FIG. 4, an inner housing 23, a lever 24, a spring 25, a wiring board 3, a plurality of battery cells 4, and a seal member 5 are housed in the box formed by the upper external housing 21 and the lower external housing 22. In other words, the battery pack 1 includes a plurality of battery cells 4 and a seal member 5, which are housed in the case 2.

As shown in FIG. 4, the upper external housing 21 has a lid shape, and is assembled to the lower external housing 22 to house the above-mentioned components in the case 2. The upper external housing 21 includes a lever attachment portion 21a and a terminal attachment portion 21b.

The lever attachment portion 21a includes a hole formed in the rear side of the upper external housing 21, and the lever 24 is inserted into the hole from the lower side to the upper side of the case 2. As shown in FIG. 5, the terminal attachment portion 21b includes a plurality of holes formed on the front side of the upper external housing 21. Specifically, the terminal attachment portion 21b include six holes. A connection terminal 31c of the wiring board 3 is arranged (inserted) inside the holes of the terminal attachment portion 21b, and it is configured so that the terminal (not shown) included in the brush cutter 101 is connected to the connection terminal 31c of the wiring board 3 in a state where the battery pack 1 is attached to the brush cutter 101. The configuration of the lever 24 and the connection terminal 31c of the wiring board 3 will be described in detail later.

As shown in FIG. 4, the lower external housing 22 has a box shape and is configured to house each component therein. The lower external housing 22 includes an opening portion 22a on the left wall and an opening portion 22b on the right wall. Specifically, the opening portion 22a is formed by arranging thirteen openings in a row in the front-rear direction on the left wall. Furthermore, the opening portion 22b is formed by arranging thirteen openings in a row in the front-rear direction on the right wall. Furthermore, the opening portion 22a and the opening portion 22b are configured so that the respective thirteen openings thereof are arranged in correspondence with each other in the front-rear direction and the up-down direction. In other words, the opening portion 22a and the opening portion 22b are arranged so as to face each other in the left-right direction.

As shown in FIG. 4, the inner housing 23 is housed in the lower external housing 22. The inner housing 23 has a box shape and is configured to further house each component therein. The inner housing 23 includes an opening portion 23a on the left wall and an opening portion 23b on the right wall. Specifically, the opening portion 23a is formed by arranging thirteen openings in a row in the front-rear direction on the left wall. Furthermore, the opening portion 23b is formed by arranging thirteen openings in a row in the front-rear direction on the right wall. Furthermore, the opening portion 23a and the opening portion 23b are configured so that the respective thirteen openings thereof are arranged in correspondence with each other in the front-rear direction and the up-down direction. In other words, the opening portion 23a and the opening portion 23b are arranged so as to face each other in the left-right direction.

Furthermore, as shown in FIG. 8, the opening portion 22a and the opening portion 23a are arranged so that the respective thirteen openings thereof match each other when viewed from the left side in a state where the inner housing 23 is attached to the lower external housing 22. The opening portion 22a and the opening portion 23a communicate with each other to form a first opening portion OP1.

The opening portion 22b and the opening portion 23b are arranged so that the respective thirteen openings thereof match each other when viewed from the right side in a state where the inner housing 23 is attached to the lower external housing 22. The opening portion 22b and the opening portion 23b communicates with each other to form a second opening portion OP2.

The first opening portion OP1 and the second opening portion OP2 are configured to allow air to flow therethrough. In other words, the lower external housing 22 and the inner housing 23, which are the case 2, include the first opening portion OP1 and the second opening portion OP2 as opening portions OP that allow air outside the case 2 to flow into the inside of the case 2. In other words, the opening portions OP include the first opening portion OP1 and the second opening portion OP2. As shown in FIG. 9, specifically, it is configured to allow air to flow from the first opening portion OP1 toward the second opening portion OP2.

As shown in FIG. 7, the lower external housing 22 includes a spring attachment portion 22c on the upper rear side, and a spring 25 is configured to be attached to the spring attachment portion 22c. The spring 25 is a spiral spring. The upper side of the spring 25 is inserted into a spring attachment portion 24a of the lever 24. The upper side of the lever 24 is inserted into the lever attachment portion 21a, and is arranged to be able to freely protrude from and retract into the lever attachment portion 21a (upper external housing 21) in a state where the upper external housing 21 and the lower external housing 22 are assembled. When the lever 24 protrudes, the battery pack 1 is fixed to the brush cutter 101, and when the lever 24 is retracted, the battery pack 1 which has been fixed becomes removable from the brush cutter 101.

As shown in FIG. 7, a plurality of battery cells 4 and a seal member 5 are housed in the inner housing 23. The battery cells 4 are secondary batteries, such as a pouch-type (laminated), square or cylindrical lithium-ion secondary batteries. In the following, the battery cells 4 will be described as a pouch-type lithium-ion battery.

The number of battery cells 4 and the specification of each battery cell 4 are set so that the battery pack 1 has a sufficiently high output and charging capacity suitable for work performed by the brush cutter 101. Specifically, fourteen battery cells 4 having the same specification are connected in series so that the battery pack 1 has a predetermined output and charging capacity.

As shown in FIG. 3, each battery cell 4 is arranged at a predetermined position by being inserted into each gap 5a provided in the seal member 5. As shown in FIG. 12, the plurality of battery cells 4 arranged at the predetermined positions is arranged with a gap GA between each other. In this case, the battery cells 4 are arranged in a row in the front-rear direction, i.e., in the attachment/detachment direction. In other words, a plurality of gaps GA is arranged in a row in the front-rear direction (an example of the first direction D1). Specifically, thirteen gaps GA are formed in a row in the front-rear direction by the fourteen battery cells 4. In this case, the width (length in the front-rear direction) of each gap GA is 2 mm. The width of the gap GA may be, for example, 0.5 to 5 mm, preferably 1 to 3 mm, and more preferably 1.5 to 2.5 mm. Specifically, for example, the width of the gap GA is 0.5, 0.6, 0.7, 0.8, 0.9, 1, 1.1, 1.2, 1.3, 1.4, 1.5, 1.6, 1.7, 1.8, 1.9, 2, 2.1, 2.2, 2.3, 2.4, 2.5, 2.6, 2.7, 2.8, 2.9, 3, 3.1, 3.2, 3.3, 3.4, 3.5, 3.6, 3.7, 3.8, 3.9, 4, 4.1, 4.2, 4.3, 4.4, 4.5, 4.6, 4.7, 4.8, 4.9, or 5 mm, and may be in a range between any two of the numerical values exemplified above.

As shown in FIG. 11, the opening portions OP are provided facing a plurality of gaps GA. Specifically, on the left side of the battery pack 1, the first opening portion OP1 is provided at a position facing the gaps GA, and the gaps GA are exposed from the first opening portion OP1. On the right side of the battery pack 1, the second opening portion OP2 is provided at a position facing the gaps GA, and the gaps GA are exposed from the second opening portion OP2. In other words, in the battery pack 1, at least one of the plurality of gaps GA is exposed from the opening portions OP. According to such an aspect, it is possible to efficiently flow air between the battery cells 4, and the battery cells 4 can be cooled more.

Furthermore, the opening portions OP may be configured to correspond to the number and positions of the gaps GA, and may be provided at positions facing each of the plurality of gaps GA. In other words, the opening portions OP may be provided with the first opening portion OP1 on the left side of the battery pack 1 and the second opening portion OP2 on the right side of the battery pack 1 so as to correspond to the number and positions of the plurality of gaps GA. Specifically, in the battery pack 1, all of the opening portions OP may be provided at positions facing the plurality of gaps GA, and the gaps GA may be exposed from the opening portions OP. In other words, all of the plurality of gaps GA may be exposed from the first opening portion OP1 on the left side of the battery pack 1, and may be exposed from the second opening portion OP2 on the right side of the battery pack 1. According to such an aspect, it becomes possible to flow air through all of the gaps GA, and all of the battery cells 4 can be cooled.

In addition, as shown in FIG. 9, specifically, the opening portions OP may be constituted by the first opening portion OP1 having thirteen openings on the left side of the battery pack 1, and the second opening portion OP2 having thirteen openings on the right side of the battery pack 1, so as to correspond to the thirteen gaps GA. In other words, the opening portions OP may include a plurality of openings, and it is preferable that one opening is provided at a position facing one gap GA. In other words, one gap GA may be configured to be exposed from one opening. According to such an aspect, the battery cells 4 can be cooled while preventing foreign objects larger than the area of each opening from entering the case 2. Furthermore, the opening portions OP and the gaps GA may be arranged in a substantially linear manner in the left-right direction. In other words, air that flows into the inside of the case 2 from the first opening portion OP1 flows in a substantially linear manner though the gaps GA and the second opening portion OP2, and flows out from the second opening portion OP2.

As shown in FIG. 6, the opening portions OP are constituted by a plurality of openings arranged in the front-rear direction, and are configured so that the opening area of each of the openings increases toward the center in the front-rear direction. In other words, the opening portions OP have an opening having the largest area, at the center of the case 2 in the front-rear direction. As a result, the opening area of the opening portions OP provided at the positions facing the plurality of gaps GA increases toward the center in the front-rear direction (an example of the first direction D1). In other words, the exposed area from the opening portions OP of the plurality of gaps GA increases toward the center in the front-rear direction. According to such an aspect, more air can flow through the center of the battery pack 1. As a result, it becomes possible to actively cool the center of the battery pack 1, where heat tends to accumulate, and the battery pack 1 can be cooled more evenly.

As shown in FIG. 3, each battery cell 4 has a positive electrode 4c and a negative electrode 4c. The plurality of battery cells 4 is arranged in a row in a predetermined direction with their electrodes 4c on the same side. Specifically, the plurality of battery cells 4 is arranged in a row in the front-rear direction, i.e., in the attachment/detachment direction of the battery pack 1, with their electrodes 4c on the upper side. The plurality of battery cells 4 is arranged in a row so that the arrangement of the positive electrodes 4c and the negative electrodes 4c alternate between the right and left sides, i.e., so that the front and back of the adjacent battery cells 4 are reversed.

Each battery cell 4 is inserted into each gap 5a provided in the seal member 5. The seal member 5 includes the same number of gaps 5a as the battery cells 4. Specifically, the seal member 5 includes fourteen gaps 5a, and one battery cell 4 is inserted into each gap 5a. As shown in FIG. 7 and FIG. 10, in a state where each battery cell 4 is inserted into the gap 5a of the seal member 5, the gap 5a and the battery cell 4 come into close contact with each other. Specifically, the battery cell 4 is inserted into the gap 5a of the seal member 5 in a state where the pouch portion protruding outward from the side of the battery cell 4 is folded. Thus, the gap 5a and the battery cell 4 come into close contact with each other. Furthermore, with the seal member 5 being housed inside the inner housing 23, the seal member 5 and the inner housing 23 come into close contact with each other. As a result, a first space IS1 is formed below the seal member 5 by the inner housing 23, the plurality of battery cells 4, and the seal member 5, and a second space IS2 is formed above the seal member 5. In other words, the seal member 5 is configured to divide the inside of the case 2 into the first space IS1 and the second space IS2.

As shown in FIG. 7, the first space IS1 and the second space IS2 are configured so as not to communicate with each other by the seal member 5 being in close contact with the inner housing 23 and the battery cells 4. In other words, the second space IS2 is configured not to communicate with the first space IS1. That is, the second space IS2 has a sealing property such that it does not communicate with the first space IS1, at least by the battery cells 4 and the seal member 5 being in close contact with each other. According to such an aspect, the seal member 5 can protect the components positioned at the second space IS2 from water, dust, and the like that may enter through the first space IS1. Furthermore, according to such an aspect, in the brush cutter 101 shown in FIG. 1, when the battery pack 1 is attached and the cutting blade 200 is being used to cut grass or the like growing out of the ground, water that has entered the first space IS1 from outside the case 2 can be suppressed from entering the second space IS2. In other words, water can be suppressed from coming into contact with the electrodes 4c of the battery cells 4 positioned in the second space IS2.

As shown in FIG. 13, a lever storage space R may be formed in the case 2. The lever storage space R is a space formed by assembling the upper external housing 21 and the lower external housing 22. A lever 24 is arranged in the lever storage space R so as to be movable relative to the upper external housing 21. Furthermore, the lever storage space R is configured so as not to communicate with the first space IS1 and the second space IS2 by dividing the inside of the case 2. In other words, the lever attachment portion 21a is configured so as not to communicate with the first space IS1 and the second space IS2.

Furthermore, as shown in FIG. 14, the upper external housing 21 may be provided with a packing P around the terminal attachment portion 21b. As a result, when the battery pack 1 is attached to the brush cutter 101, the packing P comes into close contact with the brush cutter 101 and the upper external housing 21, thus preventing communication between the second space IS2 and the outside of the battery pack 1. The packing P may be any material that has a sealing property when it comes into close contact with the brush cutter 101 and the upper external housing 21, and may be, for example, a rubber packing. According to such an aspect, the second space IS2 can be isolated from the outside of the case when the battery pack 1 is attached to the brush cutter 101.

As shown in FIG. 8, in the first space IS1, the battery cells 4 housed in the case 2 are arranged between the first opening portion OP1 and the second opening portion OP2. In other words, the second opening portion OP2 is arranged on the opposite side of the first opening portion OP1 via the plurality of battery cells 4, and is configured to allow air that has flowed into the inside of the case 2 to flow out. According to such an aspect, it becomes possible to allow air to flow in a linear manner between the battery cells 4, thereby further facilitating cooling of the battery cells 4. The opening portions OP may be configured to open in a vertical direction in a state where the battery pack 1 is attached to the brush cutter 101. Specifically, in a state where the battery pack 1 is attached to the brush cutter 101, the first opening portion OP1 may be arranged on the ground side, and the second opening portion OP2 may be arranged on the top side, for example. According to such an aspect, the air flow from the ground side to the top side (upward airflow) can be used to release heat generated by the heat generation with the battery cells 4 to the top side, thereby allowing the battery cells 4 to be cooled more.

As shown in FIG. 8, the seal member 5 divides the space into the first space IS1 and the second space IS2, so that the battery cells 4 have a first region 4a and a second region 4b that are defined according to the position where the seal member 5 is attached. That is, each battery cell 4 includes a first region 4a positioned in the first space IS1 and a second region 4b positioned in the second space IS2. As shown in FIG. 8, specifically, the seal member 5 is attached to the upper side of the battery cells 4. Furthermore, each battery cell 4 has the first region 4a below the position where the seal member 5 is attached, and the second region 4b above the position where the seal member 5 is attached. The second region 4b includes the electrodes 4c arranged on the upper side of the battery cells 4. In other words, the second region 4b includes the electrodes 4c. According to such an aspect, by protecting the electrodes 4c in the second region 4b of the battery cells 4 from the intrusion of water, dust, and the like, it is possible to cool the first region 4a of the battery cells 4 while preventing malfunction and damage.

As shown in FIG. 7 and FIG. 12, the gaps GA are formed in the first space IS1. As shown in FIG. 8, the first space IS1 is configured to communicate with the first opening portion OP1 and the second opening portion OP2, which are the opening portions OP. According to such an aspect, it is possible to provide the first space IS1, which allows outside air to flow through, and the second space IS2, which can prevent the intrusion of water, dust, and the like. As a result, it is possible to protect the components positioned in the second space IS2 while cooling the battery cells 4 positioned in the first space IS1.

As shown in FIG. 7, the volume of the first space IS1 may be larger than the volume of the second space IS2. In other words, the first region 4a is preferably set so that most of the battery cells 4 is positioned in the first space IS1, except for the electrodes 4c of the battery cells 4. Specifically, the volume of the first space IS1 is about three times the volume of the second space IS2. The volume of the first space IS1 may be larger than the volume of the second space IS2 by any ratio, and the any ratio may be, for example, 1.4 to 10, preferably 2 to 7, and more preferably 3 to 5. Specifically, for example, the any ratio is 1.4, 1.6, 1.8, 2, 2.2, 2.4, 2.6, 2.8, 3, 3.2, 3.4, 3.6, 3.8, 4, 4.2, 4.4, 4.6, 4.8, 5, 5.2, 5.4, 5.6, 5.8, 6, 6.2, 6.4, 6.6, 6.8, 7, 7.2, 7.4, 7.6, 7.8, 8, 8.2, 8.4, 8.6, 8.8, 9, 9.2, 9.4, 9.6, 9.8, or 10, and may be in a range between any two of the numerical values exemplified above. According to such an aspect, by protecting the electrodes 4c included in the battery cells 4 from the intrusion of water, dust, and the like, it is possible to cool most of the battery cells 4 while preventing malfunction and damage.

As shown in FIG. 3, the wiring board 3 which is electrically connected to the electrodes 4c is arranged on the upper side of the battery cells 4. In other words, the wiring board 3 is electrically connected to the electrodes 4c of the battery cells 4. Specifically, the wiring board 3 includes a first wiring board 31 and a second wiring board 32. The first wiring board 31 and the second wiring board 32 are electrically connected by a connector connection portion 31b included in the first wiring board 31 and a connector 32b included in the second wiring board 32. The second wiring board 32 includes electrode attachment portions 32c, and the electrodes 4c are inserted into the electrode attachment portions 32c and fixed by welding. The electrodes 4c may be fixed by being press-fitted into the electrode attachment portions 32c. In this case, the defective battery cell 4 is easily replaced with a new battery cell 4. In addition, bolts 33 are inserted into through holes 31a of the first wiring board 31, and the threaded portions of the bolts 33 protruding from the first wiring board 31 screw into threaded holes 32a of the second wiring board 32. As a result, the first wiring board 31 and the second wiring board 32 are fixed together.

Furthermore, the first wiring board 31 includes the connection terminal 31c on the front upper side. As shown in FIG. 5, the connection terminal 31c is configured to be electrically connectable via the terminal attachment portion 21b of the upper external housing 21 in a state where the first wiring board 31 is housed in the case 2. Thus, the battery pack 1 and the brush cutter 101 are electrically connected in a state where the battery pack 1 is attached to the brush cutter 101.

Furthermore, the seal member 5 may be an elastic body. The elastic body can be composed of at least one selected from a group consisting of norbornene rubber (NB), chloroprene rubber (CR), acrylonitrile butadiene rubber (NBR), urethane rubber, fluororubber, and silicone rubber. According to such an aspect, the elasticity of the seal member 5 can further improve the sealing property. The seal member 5 is not limited to an elastic body, but may be any member that can come into close contact with the battery cells 4 and the inner housing 23 and seal them, for example, a member that comes into close contact with them by plastic deformation, or that comes into close contact with them by using a packing, a sealant, etc.

Furthermore, the seal member 5 may be made of a single member. According to such an aspect, it is possible to further improve airtightness. It is also possible to prevent an increase in the number of components of the battery pack 1.

### [Others]

The battery pack 1 according to one embodiment may be implemented in the following aspect.

The opening portions OP shown in FIG. 6 have been described as a case in which the opening portions OP are a plurality of openings arranged in a row in the front-rear direction. However, the opening portions OP are not limited thereto. As shown in FIG. 15, for example, the opening portions OP can also be configured as a single opening. That is, the first opening portion OP1 and the second opening portion OP2 can each be configured as a single opening. According to such an aspect, more air can be flowed through the gaps GA, and thus the battery cells 4 can be cooled more.

Furthermore, the present disclosure may be provided with each of the following aspects.
(1) A battery pack, comprising: a case including opening portions that allow air outside the case to flow into an inside of the case; and a plurality of battery cells housed in the case and arranged with a gap between each other, the gap comprising a plurality of gaps, the opening portions being provided facing the gaps.
   According to such an aspect, it is possible to efficiently flow air between the battery cells, and the battery cells can be cooled more.
(2) The battery pack according to (1), wherein the opening portions are provided at positions facing each of the gaps.
   According to such an aspect, it is possible to flow air through all of the gaps, and all of the battery cells can be cooled.
(3) The battery pack according to (1) or (2), wherein: the opening portions include a first opening portion and a second opening portion, the first opening portion is configured to allow air to flow into the inside of the case, and the second opening portion is arranged on an opposite side of the first opening portion via the battery cells, and is configured to allow air that has flowed into the inside of the case to flow out.
   According to such an aspect, it becomes possible to allow air to flow in a linear manner between the battery cells, thereby further facilitating cooling of the battery cells.
(4) The battery pack according to any one of (1) to (3), further comprising a seal member configured to divide the inside of the case into a first space and a second space, wherein: the first space is configured to communicate with the opening portions, and the second space is configured not to communicate with the first space.
   According to such an aspect, it is possible to provide the first space, which allows outside air to flow through, and the second space, which can prevent the intrusion of water, dust, and the like. As a result, it is possible to protect the components positioned in the second space while cooling the battery cells positioned in the first space.
(5) The battery pack according to (4), wherein: each of the battery cells includes a first region positioned in the first space and a second region positioned in the second space, and the second region includes electrodes.
   According to such an aspect, by protecting the electrodes in the second region of the battery cells from the intrusion of water, dust, and the like, it is possible to cool the first region of the battery cells while preventing malfunction and damage.
(6) The battery pack according to (4) or (5), wherein volume of the first space is larger than volume of the second space.
   According to such an aspect, by protecting the electrodes included in the battery cells from the intrusion of water, dust, and the like, it is possible to cool most of the battery cells while preventing malfunction and damage.
(7) The battery pack according to any one of (1) to (6), wherein: the gaps are arranged in a row in a first direction, and opening area of the opening portions provided at positions facing the gaps increases toward the center in the first direction.
   According to such an aspect, more air can flow through the center of the battery pack. As a result, it becomes possible to actively cool the center of the battery pack, where heat tends to accumulate, and the battery pack can be cooled more evenly.
(8) The battery pack according to any one of (1) to (7), wherein: the opening portions include a plurality of openings, and one of the openings is provided at a position facing one of the gaps.

According to such an aspect, the battery cells can be cooled while preventing foreign objects larger than the area of each opening from entering the case.

Of course, the present disclosure is not limited thereto.

Finally, various embodiments of the present disclosure have been described, but these are presented as examples and are not intended at all to limit the scope of the disclosure. Novel embodiments can be implemented in various other forms, and various omissions, replacements, and modifications can be made within the scope of the spirit of the disclosure. The embodiments and its modifications are included in the scope and the spirit of the disclosure and are included in the scope of the disclosure described in claims and the equivalent scope thereof.

## Claims

1. A battery pack, comprising:
a case including opening portions that allow air outside the case to flow into an inside of the case; and
a plurality of battery cells housed in the case and arranged with a gap between each other,
the gap comprising a plurality of gaps,
the opening portions being provided facing the gaps.

2. The battery pack according to claim 1, wherein
the opening portions are provided at positions facing each of the gaps.

3. The battery pack according to claim 1 or 2, wherein:
the opening portions include a first opening portion and a second opening portion,
the first opening portion is configured to allow air to flow into the inside of the case, and
the second opening portion is arranged on an opposite side of the first opening portion via the battery cells, and is configured to allow air that has flowed into the inside of the case to flow out.

4. The battery pack according to any one of claims 1 to 3, further comprising
a seal member configured to divide the inside of the case into a first space and a second space, wherein:
the first space is configured to communicate with the opening portions, and
the second space is configured not to communicate with the first space.

5. The battery pack according to claim 4, wherein:
each of the battery cells includes a first region positioned in the first space and a second region positioned in the second space, and
the second region includes electrodes.

6. The battery pack according to claim 4 or 5, wherein
volume of the first space is larger than volume of the second space.

7. The battery pack according to any one of claims 1 to 6, wherein:
the gaps are arranged in a row in a first direction, and
opening area of the opening portions provided at positions facing the gaps increases toward the center in the first direction.

8. The battery pack according to any one of claims 1 to 7, wherein:
the opening portions include a plurality of openings, and
one of the openings is provided at a position facing one of the gaps.
